# EUROPÄISCHE PATENTSCHRIFT

(11) **EP 1 066 355 B1**
(45) Veröffentlichungstag und Bekanntmachung des Hinweises auf die Patenterteilung: **15.10.2003**
(21) Anmeldenummer: 99919170.3
(22) Anmeldetag: 31.03.1999
(51) Int. Cl.: C09D 11/00, C09B 67/46

(54) **PRÄZIPITIERTE, WASSERUNLÖSLICHE FARBSTOFFE IN KOLLOID-DISPERSER FORM**
PRECIPITATED WATER-INSOLUBLE COLORANTS IN COLLOID-DISPERSE FORM
COLORANTS PRECIPITES, INSOLUBLES DANS L'EAU, SOUS FORME DISPERSEE COLLOIDALE

(30) Priorität: 03.04.1998 DE 19815129
(43) Veröffentlichungstag der Anmeldung: 10.01.2001
(73) Patentinhaber: BASF AKTIENGESELLSCHAFT, 67056 Ludwigshafen (DE)
(72) Erfinder: AUWETER, Helmut, D-67117 Limburgerhof (DE); BOHN, Heribert, D-67319 Wattenheim (DE); HEGER, Robert, D-69124 Heidelberg (DE); HORN, Dieter, D-69120 Heidelberg (DE); SIEGEL, Bernd, D-67166 Otterstadt (DE); SIEMENSMEYER, Karl, D-67227 Frankenthal (DE)
(74) Vertreter: Kinzebach, Werner, Dr.
(86) Internationale Anmeldenummer: EP9902217
(87) Internationale Veröffentlichungsnummer: WO99051695

(56) Entgegenhaltungen:
- EP-A- 0 408 333
- EP-A- 0 562 732
- DE-A- 3 629 854
- GB-A- 2 001 351
- GB-A- 2 018 835
- US-A- 5 531 816

## Beschreibung

Die vorliegende Erfindung betrifft ein Verfahren zur Herstellung von präzipitierten, wasserunlöslichen Farbstoffen in kolloid-disperser Form, nach diesem Verfahren erhältiche Farbstoffe und ihre Verwendung.

Pigmente und Dispersionsfarbstoffe sind die wichtigsten Vertreter der Gruppe der wasserunlöslichen Farbstoffe. Häufig ist es erforderlich, bei Dispersionsfarbstoffen sogar unumgänglich, sie in kolloid-disperser Form zur Anwendung zu bringen. Besonders wichtig ist die kolloid-disperse Verteilung, wenn die Farbstoffe beim Ink-Jet-Druck, einem weitverbreiteten Verfahren, zum kontaktlosen Bedrucken von verschiedenen Printmedien, wie beispielsweise Papier, Transparentfolien, Fotopapieren und Textilien, zur Anwendung kommen. Um eine kolloid-disperse Verteilung zu erreichen, werden die Farbstoffkristalle in der Regel mechanisch zerkleinert, beispielsweise durch Mahlen. Ein entscheidender Nachteil des Vermahlens besteht darin, daß Metallabrieb oder Abrieb der Mahlkörper in das Farbstoffpulver gelangt, der bei der Anwendung des Farbstoffpulvers zu großen Problemen führen kann. Beispielsweise kann es zur Beschädigung oder Verstopfung der Düsen beim Ink-Jet-Druck kommen.

Pigmente und Dispersionsfarbstoffe in kolloid-disperser Form müssen gegen Rekristallisation, Agglomeration und Flockung stabilisiert werden. Eine Möglichkeit hierzu schlägt die US 5,531,816 vor. Sie beschreibt eine Ink-Jet-Tintenzubereitung auf Wasserbasis, die wenigstens ein deagglomeriertes Pigment mit einer Teilchengröße im Bereich von 5 nm bis 1 µm, wenigstens eine wasserunlösliche organische Verbindung und wenigstens eine amphiphile Verbindung enthält. Die wasserunlösliche organische Verbindung ist dabei mit Hilfe der amphiphilen Verbindung in Form kleiner Tröpfchen in der Wasserphase solubilisiert. Das Pigment ist in den Tröpfchen der wasserunlöslichen organischen Verbindung dispergiert und wird auf diese Weise in deagglomerisiertem Zustand gehalten.

Die DE 27 32 500 A beschreibt ein Verfahren zur Herstellung von wasser-dispergierbaren, pulverförmigen Dispersionsfarbstoffe durch Sprühtrocknung einer Lösung der Farbstoffe in Ameisensäure, Formamid, N-Methylformamid, Butyrolacton oder Ethylenglykol. Die Lösung kann außerdem Dispergiermittel, Tenside und Schutzkolloide enthalten. Das erhaltene Farbstoffpulver besteht aus Teilchen im Nanopartikelbereich.

Die US 5,531,816 beschreibt eine Druckertintezusammensetzung, die ein deagglomeriertes Pigment, eine wasserunlösliche organische Verbindung, ein Amphiphil und Wasser enthält. Die verwendeten Pigmente sind nicht in organischen Lösungsmitteln löslich.

Die GB 2018835 beschreibt kolloid-disperse polymerumhüllte Farbstoffe, die durch Mischen des Farbstoffs und des Polymers in einem oder mehreren Lösungsmitteln und anschließendes Entfernen des/der Lösungsmittel durch Sprühtrocknen erhalten werden.

Den Farbstoffteilchen gemäß Stand der Technik ist gemeinsam, daß sie eine relativ breite Teilchengrößenverteilung aufweisen und daher die Brillanz der Farbe nicht optimal ist. Außerdem weisen die Farbstoffteilchen gemäß dem Stand der Technik eine hohe Kristallinität und eine unregelmäßige Teilchenform auf.

Der vorliegenden Erfindung liegt die Aufgabe zugrunde, ein Verfahren zur Herstellung von wasserunlöslichen Farbstoffen in kolloid-disperser Form mit enger Teilchengrößenverteilung zur Verfügung zu stellen. Darüberhinaus sollen die durch das Verfahren erhältliche Farbstoffteilchen weitgehend sphärisch..und amorph sein.

Überraschenderweise wurde nun gefunden, daß diese Aufgabe gelöst wird durch ein Verfahren, bei dem man den Farbstoff aus einer Lösung des Farbstoffes in einem mit Wasser mischbaren organischen Lösungsmittel oder einer Emulsion des Farbstoffs in einem mit. Wasser nicht mischbaren Lösungsmittel fällt.

Gegenstand der vorliegenden Erfindung ist daher ein Verfahren zur Herstellung eines präzipitierten, wasserunlöslichen oder schwer wasserlöslichen Farbstoffs in kolloid-disperser Form mit einer mittleren Teilchengröße im Bereich von 5 nm bis 5 µm und mit einer Breite der Teilchengrößenverteilung (Varianz) von weniger als 50%, jeweils gemessen mittels Quasi-elastischer Lichtstreuung und Auswertung nach der Kumulantenmethode (vgl. Bruce J. Berne und Robert Pecora, "Dynamic Light Scattering", John Wiley & Sons, Inc. 1976, S. 196f.), bei dem man den Farbstoff
a) aus einer Lösung in einem mit Wasser mischbaren organischen Lösungsmittel durch Zugabe einer Wasserphase fällt, oder
b) aus einer Emulsion, die erhältlich ist durch Emulgieren einer Lösung des Farbstoffes in einem mit Wasser nichtmischbaren organischen Lösungsmittel und die ein Schutzkolloid enthält, in einer wässrigen Phase durch Abziehen des Lösungsmittels fällt.

Vorzugsweise liegt die mittlere Teilchengröße im Bereich von 5 nm bis 1 µm, insbesondere 5 nm bis 500 nm. Die Breite der Teilchengrößenverteilung beträgt vorzugsweise weniger als 40%.

Aufgrund des Herstellungsverfahrens besitzen die mit dem erfindungsgemäßen Verfahren erhaltenen Farbstoffteilchen nur einen geringen kristallinen Anteil. Die Kristallinität beträgt vorzugsweise höchstens 30%, insbesondere höchstens 10%. Besonders bevorzugt liegen die Teilchen in vollständig amorpher Form vor.

Darüber hinaus liegen vorzugweise mindestens 80%, insbesondere mindestens 90% des Farbstoffes in Form sphärischer Teilchen vor.

Die mit dem erfindungsgemäßen Verfahren erhaltenen Farbstoffe ergeben aufgrund ihrer engen Teilchengrößenverteilung insbesondere beim Papier- und Fotodruck eine reinere Farbe und damit eine größere Brillanz. Darüber hinaus ergeben sie auch eine höhere Farbstärke.

Ferner zeigen die mit dem erfindungsgemäßen Verfahren erhaltenen Farbstoffe ein vorteilhaftes Viskositätsverhalten und sie lassen sich aufgrund ihres hohen amorphen Anteils in einfacher Weise auf die Fasern aufbringen.

Erfindungsgemäß bevorzugt sind wasserunlösliche oder schwer wasserlösliche Azo-, Anthrachinon-, Chinophthalon-, Methin- und Azamethinfarbstoffe.

### Verfahrensweise A) (wassermischbares Lösungsmittel):

Zur Herstellung der Farbstoffteilchen werden die grobkristallinen Farbstoffteilchen zunächst in einem geeigneten mit Wasser mischbaren organischen Lösungsmittel gelöst. Welches Lösungsmittel verwendet wird, richtet sich nach den Löslichkeitseigenschaften des Farbstoffes. Im Prinzip sind alle mit Wasser mischbaren (dazu zählen auch solche Lösungsmittel, die mit Wasser nur teilweise, d.h. mindestens zu etwa 10 Gew.-%, mischbar sind) organischen Lösungsmittel brauchbar. Im allgemeinen verwendet man solche Lösungsmittel, die thermisch stabil sind. Geeigne-te Lösungsmittel sind:
1. Mono- und Polyalkohole wie Methanol, Ethanol, n-Propanol, Isopropanol, Glykol, Glyzerin, Propylenglykol, Polyethylenglykole etc.;
2. Ether, wie Tetrahydrofuran, Dioxan, 1,2-Propandiol-1-n-propylether, 1,2-Butandiol-1-methylether, Ethylenglykolmonomethylether, Diethylenglykolmonomethylether etc.;
3. Ester wie Essigsäuremethylester, Monoester von Ethylenglykol oder Propylenglykolen mit Essigsäure, Butyrolacton etc.;
4. Ketone, wie Aceton oder Methylethylketon;
5. Amide, wie Formamid, Dimethylformamid, Dimethylacetamid, N-Methylpyrrolidon und Hexamethylphosphorsäuretriamid ;
6. Sulfoxide und Sulfone, wie Dimethylsulfoxid und Sulfolan;
7. Alkancarbonsäuren, wie Ameisensäure oder Essigsäure.

Bevorzugt sind die oben unter 1 bis 5 aufgeführten Lösungsmittel, insbesondere Methanol, Ethanol, n-Propanol, Isopropanol, 1,2-Butandiol-1-methylether, 1,2-Propandiol-1-n-propylether, Dimethylacetamid, N-Methylpyrrolidon oder Aceton.

Die Menge an Lösungsmittel richtet sich nach dem zu lösenden Farbstoff. Im allgemeinen wird man bestrebt sein, möglichst wenig Lösungsmittel einzusetzen.

Das Lösen der grobkristallinen Farbstoffe erfolgt im allgemeinen bei erhöhter Temperatur, da bei Raumtemperatur oder darunter die Löslichkeit zu gering ist. Vorzugsweise arbeitet man bei 50 bis 300°C, insbesondere 100 bis 300°C. Falls der Siedepunkt des Lösungsmittels zu gering ist, kann das Lösen auch unter Druck erfolgen, beispielsweise bei einem Druck von bis zu 50 bar.

Das Ausfällen der Farbstoffpartikel in kolloid-disperser Form erfolgt dann durch Zugabe von Wasser zu der Lösung des Farbstoffes in dem mit Wasser mischbaren organischen Lösungsmittel. Die Temperatur, bei welcher der Fällungsvorgang erfolgt, ist nicht kritisch. Zweckmäßigerweise gibt man Wasser von einer Temperatur im Bereich von 0 bis 50°C zu der heißen Lösung des Farbstoffes.

Vorzugsweise enthält das Wasser wenigstens ein Schutzkolloid, um zu verhindern, daß die kolloid-dispersen Partikel wieder agglomerieren. Als Schutzkolloide kommen die zu diesem Zweck üblicherweise verwendeten natürlichen oder synthetischen Polymere zur Anwendung. Brauchbare natürliche oder halbsynthetische Schutzkolloide sind beispielsweise Gelatine, Fischgelatine, Stärke oder Stärkederivate, wie Dextrine, Pektin, Gummi arabicum, Casein, Caseinat, Alginate, Cellulose und Cellulosederivate, wie Methylcellulose, Carboxymethylcellulose, Hydroxypropylcellulose oder Hydroxypropylmethylcellulose.

Brauchbare synthetische Schutzkolloide sind wasserlösliche Homo- oder Copolymere, wobei es sich um Neutralpolymere, kationische Polymere und anionische Polymere handeln kann. Auch Komplexe aus polykationischen und polyanionischen Polymeren sowie Coazervate kommen in Betracht.

Die Polymere sind aufgebaut aus Monomeren mit hydrophilen Gruppen und gegebenenfalls Comonomeren mit hydrophoben Gruppen, wobei das Verhältnis zwischen hydrophilen und hydrophoben Gruppen so gewählt ist, daß das Copolymer wasserlöslich ist.

Geeignete hydrophile Monomere sind beispielsweise N-Vinyllactäme, wie N-Vinylpyrrolidon; Acrylamid oder Methacrylamid und deren N-C₁-C₄-Mono- oder N,N-Di-C₁-C₄-alkylderivate; Acrylsäure oder Methacrylsäure; Monomere mit einem primären, sekundären oder tertiären basischen Stickstoffatom, wie Amino-C₂-C₄-alkylacrylate und -methacrylate, z.B. Dimethylaminoethyl(meth)acrylat, und die mit C₁-C₄-Alkylierungsmitteln quaternisierten Derivate davon; ethylenisch ungesättigte Sulfonsäuren, wie Vinylsulfonsäure, Acrylamido-N-propansulfonsäure und Styrolsulfonsäure; Hydroxy-C₂-C₄-alkylacrylate und -methacrylate; Allylalkohol und Methallylalkohol; olefinisch ungesättigte Verbindungen mit Epoxygruppen, wie Glycidylacrylat und Glycidylmethacrylat; Monoester und Diester von ethylenisch ungesättigten C₄-C₈-Dicarbonsäuren, wie Maleinsäure und Itaconsäure, mit Aminoalkoholen, wie Dimethylaminoethanol; und Amide oder Imide dieser Carbonsäuren mit Diaminen, wie Dimethylaminopropylamin.

Geeignete Comonomere mit hydrophoben Gruppen sind beispielsweise C₂-C₄-Alkylvinylether, wie Ethylvinylether; Vinylester von C₂-C₈-Carbonsäuren, wie Vinylacetat und Vinylpropionat; C₁-C₈-Alkylacrylate und -methacrylate, wie Methyl-, Ethyl-, n-Butyl und 2-Ethylhexylacrylat und -methacrylat; vinylaromatische Verbindungen wie Styrol; und 1-Olefine mit bis zu 20 Kohlenstoffatomen, wie Ethylen, Propylen und Isobutylen.

Als Schutzkolloid brauchbare Polymere sind somit insbesondere Polyvinylpyrrolidon, Polyacrylsäure oder Polymethacrylsäure und Copolymere davon mit einem Dicarbonsäureanhydrid einer ethylenisch ungesättigten C₄-C₈-Carbonsäure, wie Maleinsäureanhydrid oder Itaconsäureanhydrid; Polyvinylalkohol und teilverseiftes Polyvinylacetat; Polyacrylamid und Polymethacrylamid und deren teilverseifte Derivate; Polymere aus Monomeren mit einer primären, sekundären oder tertiären Aminogruppe und die N-C₁-C₄-Mono- und N,N-C₁-C₄-Dialkylderivate sowie die mit C₁-C₄-Alkylierungsmitteln quaternisierten Derivate davon; Polyethylenoxide und Polypropylenoxide sowie Blockcopolymere davon; Polyaminosäuren wie Polyasparaginsäure und Polylysin, sowie Kondensate aus Phenylsulfonsäure mit Harnstoff und Formaldehyd und Kondensate aus Naphthalinsulfonsäure mit Formaldehyd.

Die Menge an Schutzkolloid in der Wasserphase liegt im allgemeinen im Bereich von 1 bis 50 Gew.-%, vorzugsweise 5 bis 30 Gew.-%, bezogen auf das Gesamtgewicht der Wasserphase. Das Gewichtsverhältnis von Farbstoff zu Schutzkolloid liegt im allgemeinen im Bereich von 2:1 bis 1:20. Die Menge an zugesetzter Wasserphase richtet sich nach dem Farbstoff, der Konzentration der Farbstofflösung und der Konzentration an Schutzkolloid in der Wasserphase. Im allgemeinen verwendet man die Farbstofflösung und die Wasserphase in einem Gewichtsverhältnis im Bereich von 1:2 bis 1:20.

Beim Fällen der Farbstoff partikel kann man auch in solchen Fällen übliche Zusätze vorsehen, beispielsweise eines der nachfolgend noch erwähnten Tenside.

Zweckmäßigerweise erfolgt das Vermischen von Farbstofflösung und Wasserphase möglichst rasch. Geeignete Apparaturen hierfür sind dem Fachmann bekannt. Brauchbar sind beispielsweise Y- oder T-Mischer oder statische Mischer.

Das erfindungsgemäße Verfahren zur Herstellung der Farbstoffteilchen kann kontinuierlich oder diskontinuierlich durchgeführt werden.

### Verfahrensweise B) (nicht-wassermischbares Lösungsmittel)

Zur Herstellung der Farbstoffteilchen nach Verfahrensweise B werden die grobkristallinen Farbstoffteilchen zunächst in einem geeigneten mit Wasser nicht-mischbaren organischen Lösungsmittel gelöst. Welches Lösungsmittel verwendet wird, richtet sich nach den Löslichkeitseigenschaften des Farbstoffs. Im Prinzip sind alle mit Wasser nicht-mischbaren organischen Lösungsmittel brauchbar. Im allgemeinen verwendet man solche Lösungsmittel, die thermisch stabil sind.

Bevorzugte Lösungsmittel sind chlorierte Kohlenwasserstoffe, wie Chloroform, Dichlorethan oder Methylenchlorid.

Das Lösen des Farbstoffes erfolgt wie unter A) beschrieben.

Durch kräftiges Einrühren der Lösungsmittelphase in die wässrige Phase mit Hilfe einer geeigneten Vorrichtung, z. B. eines Ultra-Turrax, wird eine Öl-in-Wasser Emulsion hergestellt.

Das Wasser enthält wenigstens einen Emulgator, um die Emulsionströpfchen zu stabilisieren und Koaleszenz zu verhindern.

Als Emulgatoren kommen die oben genannten natürlichen, halbsynthetischen oder synthetischen Schutzkolloide zur Anwendung.

Die Menge an Emulgator in der wasserphase liegt im allgemeinen im Bereich von 1 bis 50 Gew.-%, vorzugsweise 5 bis 30 Gew.-%, bezogen auf das Gesamtgewicht der Wasserphase. Das Gewichtsverhältnis von Farbstoff zu Emulgator liegt im allgemeinen im Bereich von 2:1 bis 1:20. Die Menge an zugesetzter Wasserphase richtet sich vor allem nach der Emulgierfähigkeit des Emulgators und der gewünschten Emulsionströpfchengröße. Im allgemeinen verwendet man die Farbstofflösung und die Wasserphase in einem Gewichtsverhältnis im Bereich von 1:2 bis 1:20.

Beim Emulgieren kann man auch die in solchen Fällen üblichen Zusätze vorsehen, beispielsweise eines der unten noch erläuterten Tenside.

Als nächster Schritt der Verfahrensweise B) wird aus der Emulsion das Lösungsmittel durch Unterdruck und/oder durch Erhitzen der Emulsion abgezogen und somit die Emulsion in eine rein wässrige Dispersion überführt. Dabei entstehen die erfindungsgemäßen Farbstoffteilchen durch Fällung.

Das erfindungsgemäße verfahren zur Herstellung der O/W-Emulsion sowie das Abziehen des Lösungsmittels kann kontinuierlich oder diskontinuierlich durchgeführt werden.

Ein weiterer Gegenstand der vorliegenden Erfindung ist ein Farbstoff, erhältlich durch das erfindungsgemäße Verfahren, wobei mindestens 80 % des Farbstoffes in Form von im Wesentlichen sphärischen Teilchen vorliegen und mit einer Kristallinität von höchstens 30 %.

Vorzugsweise besitzt der erfindungsgemäße Farbstoff eine mittlere Teilchengröße im Bereich von 5 nm bis 1 µm und/oder eine Varianz von weniger als 45%.

Die mit den erfindungsgemäßen Verfahren erhaltene kolloidale Farbstofflösung kann direkt zu den gewünschten Färbemitteln verarbeitet werden. Alternativ kann man die Farbstofflösung aufkonzentrieren, indem man einen Teil der flüchtigen Bestandteile in üblicher Weise entfernt. Die flüchtigen Bestandteile können auch vollständig entfernt werden, beispielsweise durch Sprühtrocknung. Man erhält dabei die erfindungsgemäßen Farbstoffe in Form eines Trockenpulvers, das erneut in Wasser kolloidal gelöst werden kann.

Die Menge an Farbstoff im Färbemittel liegt im allgemeinen im Bereich von 0,1 bis 10 Gew.-%, vorzugsweise 1 bis 8 Gew.-%.

Die nach dem Fällen erhaltene kolloidale Lösung des Farbstoffes kann direkt als Färbemittel eingesetzt werden. Im allgemeinen werden jedoch für die Formulierung eines Färbemittels übliche Hilfs- und Zusatzstoffe zugegeben. Besonders bevorzugt werden die Farbstoffe bzw. die kolloidalen Farbstofflösungen zu Ink-Jet-Tintenzubereitungen verarbeitet, die in einem wäßrigen Medium mindestens einen der erfindungsgemäßen Farbstoffe in kolloid-disperser Form enthalten.

Für die meisten Anwendungen ist der Zusatz von Tensiden erforderlich, die nach dem gewünschten Anwendungsgebiet gewählt werden. Dabei können die übliche anionischen, kationischen oder nicht-ionischen Tenside zur Anwendung kommen.

Geeignete Tenside, insbesondere zur Anwendung in Ink-Jet-Zubereitungen sind anionische, kationische und nicht-ionische Tenside. Anionische Tenside sind beispielsweise Seifen, Alkansulfonate, Olefinsulfonate, Alkylarylsulfonate, Alkylnaphthalinsulfonate, Alkylsulfate und Alkylethersulfate, Alkylmethylestersulfonate, Acylglutamate, Sarkosinate und Taurate. Beispiele sind Natriumlaurylsulfat, Natriumlaurylethersulfat, Oleylsulfonat, Nonylbenzolsulfonat, Natriumdodecylbenzolsulfonat und Butylnaphthalinsulfonat.

Katonische Tenside sind beispielsweise Alkyltrimethylammonium-Halogenide/Alkylsulfate, Alkylpyridinium-Halogenide und Dialkyldimethylammonium-Halogenide/Alkylsulfate.

Geeignete nicht-ionische Tenside sind beispielsweise alkoxylierte tierische/pflanzliche Fette und Öle, z. B. Maisölethoxylate, Rizinusölethoxilate, Talgfettethoxilate; Glycerinester, z. B. Glycerinmonostearat; Fettalkoholalkoxylate und Oxoalkoholalkoxylate; Alkylphenolalkoxylate, z. B. Isononylphenolethoxylate; und Zukkertenside, z. B. Sorbitanfettsäureester (Sorbitanmonooleat, Sorbitantristearat), Polyoxyethylensorbitanfettsäureester.

Geeignet sind auch zwitterionische Tenside, wie Sulfobetaine, Carboxybetaine, Alkyldimethylaminoxide, z. B. Tetradecyldimethylaminoxid, und Polymertenside, wie Di-, Tri- und Multi-Blockpolymere vom Typ (AB)x-, ABA und BAB, z. B. Polyethylenoxid-block-polypropylenoxid, Polystyrol-block-polyethylenoxid, und AB-Kammpolymere, z. B. Polymethacrylat-comb-polyethylenoxid.

Die Menge an Tensid, wenn vorhanden, liegt im allgemeinen im Bereich von 0,5 bis 25 Gew.-%, insbesondere 1 bis 15 Gew.-%, bezogen auf das Gesamtgewicht der Zubereitung.

Darüber hinaus kann die Zubereitung weitere Additive enthalten, wie Additive zur Viskositätseinstellung, beispielsweise wasserlösliche Stärke- und Cellulosederivate als Verdickungsmittel, Additive zur Verbesserung des Antrocknungsverhaltens, wie z. B. Isopropanol, Aceton, Diethylenglykol, Butyltriglykol; Biozide und Fungizide; Sequestriermittel, wie Ethylendiaminotetraessigsäure; und Pufferlösungen zur pH-Kontrolle.

Die erfindungsgemäßen Farbstoffe bzw. Färbemittel sind brauchbar zum Bedrucken von Printmedien, insbesondere von Papier, Folien, Transparentfolien, Papieren zur Reproduktiondigitaler photographischer Aufnahmen und Graphiken, sowie zum Bedrucken von Textilien, vor allem solcher aus synthetischen Fasern. Bevorzugt zum Bedrucken der Textilien ist dabei der Transferdruck.

Die nachfolgenden Beispiele erläutern die Erfindung, ohne sie zu begrenzen.

### Beispiel 1

30 g eines blauen Chinon-Farbstoffes wurden in 250 g NMP bei 25°C eingerührt, so daß eine trübe grob-disperse Lösung entstand.

Diese Lösung wurde durch Erhitzen in einem Wärmetauscher in den molekular gelösten Zustand überführt. Die Verweilzeit der Chinonblau Lösung im Wärmetauscher betrug ca. 80 s bei einer Temperatur von 210°C.

Zur Ausfällung des Farbstoffes in kolloid-disperser Form wurde die molekulardisperse Lösung bei 210°C einer Mischkammer zugeführt. Dort erfolgte die Vermischung mit einer Lösung von 200 g Sokalan CP 5 (Acrylsäure-Maleinsäureanhydrid-Copolymer) in 2320 g Wasser. Der gesamte Prozeß erfolgte unter Druckbegrenzung auf 30 bar, um eine Verdampfung des Lösungsmittels zu verhindern. Nach dem Mischen wurde eine kolloid-disperse Chinonblau-Dispersion erhalten.

Durch quasi-elastische Lichtstreuung wurde die mittlere Teilchengröße zu 310 nm bei einer Varianz von 43% bestimmt.

### Beispiel 2

30 g eines blauen Chinon-Farbstoffes wurden, wie in Beispiel 1 beschrieben, gelöst und gefällt, wobei jedoch anstelle von Sokalan CP5 als Schutzkolloid Wettol Dl (Phenolsulfonsäureharnstoff-Formaldehyd-Kondensat) verwendet wurde. Man erhielt eine kolloid-disperse Chinonblau-Dispersion.

Durch quasi-elastische Lichtstreuung wurde die mittlere Teilchengröße zu 270 nm bei einer Varianz von 45% bestimmt.

### Beispiel 3

2 g eines roten Methinfarbstoffes wurden in 40 g Methylenchlorid bei 25 °C gelöst und anschließend mittels eines Ultra-Turrax in einer wässrigen Phase emulgiert. Die wässrige Phase bestand aus 530 g Wasser und 20 g 1M NaOH und enthielt 4 g Casein gelöst.

Am Rotationsverdampfer wurde bei 60 °C und einem Druck von 90 mbar das Methylenchlorid abgezogen und die Dispersion anschließend auf einen Farbstoffgehalt von 3 Gew.-% aufkonzentriert.

Die mittels quasi-elastischer Lichtstreuung gemessene Teilchengröße beträgt 213 nm bei einer varianz von 38%.

### Beispiel 4

### Herstellung einer 1%igen Ink-Jet-Formulierung

Der aus Beispiel 1 erhaltenen kolloidalen Dispersion werden zur Formulierung einer Ink-Jet-Tinte folgende Komponenten zugesetzt: 240 g Polyethylenglykol als Feuchthaltemittel, 500 g Sorbit als Verdicker sowie 15 g Glutardialdehyd als Biozid. Größe, Form und Morphologie der kolloidal vorliegenden Farbstoff-Teilchen bleiben in dieser Formulierung erhalten.

### Beispiel 5

### Herstellung einer 3%igen Ink-Jet-Formulierung

Die aus Beispiel 2 erhaltene kolloidale Dispersion wird durch Abziehen eines Teils der flüssigen Phase um den Faktor drei aufkonzentriert. Dieser konzentrierten kolloidalen Lösung werden zur Formulierung einer Ink-Jet-Tinte folgende Komponenten zugesetzt. 80 g Polyethylenglykol als Feuchthaltemittel, 150 g Sorbit als Verdicker sowie 5 g Glutardialdehyd als Biozid. Größe, Form und Morphologie der kolloidal vorliegenden Farbstoff-Teilchen bleiben in dieser Formulierung erhalten.

## Patentansprüche

1. Verfahren zur Herstellung eines präzipitierten, wasserunlöslichen oder schwer wasserlöslichen Farbstoffs in kolloid-disperser Form mit einer mittleren Teilchengröße im Bereich von 5 nm bis 5 µm und mit einer Varianz von weniger als 50%, jeweils gemessen mittels quasi-elastischer Lichtstreuung und Auswertung nach der Kumulantenmethode, bei dem man den Farbstoff
a) aus einer Lösung in einem mit Wasser mischbaren organischen Lösungsmittel durch Zugabe einer Wasserphase fällt, oder
b) aus einer Emulsion, die erhältlich ist durch Emulgieren einer Lösung des Farbstoffes in einem mit Wasser nicht-mischbaren organischen Lösungsmittel und die ein Schutzkolloid enthält, in einer wässrigen Phase durch Abziehen des Lösungsmittels fällt.

2. Verfahren nach Anspruch 1, wobei das Fällen durch Zugabe einer wäßrigen Lösung eines Schutzkolloids erfolgt.

3. Verfahren nach Anspruch 1 oder 2, wobei das Schutzkolloid ausgewählt ist unter Polyvinylpyrrolidon, Polyacrylsäure oder Polymethacrylsäure und den Copolymeren davon mit einem ethylenisch ungesättigten C₄-C₈-Dicarbonsäureanhydrid, Polyacrylamid, Polymethacrylamid, Polyethylenoxid, Polypropylenoxid und Copolymeren davon, Gelatine, Casein und Naphtalinsulfonsäure-Formaldehyd-Kondensat.

4. Farbstoff, erhältlich durch das Verfahren nach einem der Ansprüche 1 bis 3, wobei mindestens 80 % des Farbstoffes in Form von im Wesentlichen sphärischen Teilchen vorliegen und mit einer Kristallinität von höchstens 30 %.

5. Farbstoff nach Anspruch 4 mit einer mittleren Teilchengröße im Bereich von 5 nm bis 1 µm und/oder einer Varianz von weniger als 45 %.

6. Färbemittel, enthaltend einen Farbstoff nach Anspruch 4 oder 5, gegebenenfalls zusammen mit üblichen Hilfs- und Zusatzstoffen.

7. Färbemittel nach Anspruch 6 in Form einer Ink-Jet-Tintenzubereitung, die in einem wässrigen Medium mindestens einen Farbstoff nach Anspruch 4 oder 5 dispergiert enthält.

8. Verwendung der Farbstoffe nach Anspruch 4 oder 5 zum Bedrukken von Printmedien, insbesondere von Papier, Folien, Transparentfolien, Papieren zur Reproduktion digitaler photographischer Aufnahmen und Graphiken, sowie zum Bedrucken von Textilien, insbesondere mittels Transferdruck.

## Claims

1. A process for preparing a precipitated, water-insoluble or sparingly water-soluble dye in colloidally disperse form having an average particle size within the range from 5 nm to 5 µm and having a variance of less than 50%, in each case measured using quasi-elastic light scattering and evaluation by the cumulant method, which comprises
a) precipitating it from a solution in a water-miscible organic solvent by addition of an aqueous phase, or
b) precipitating it in an aqueous phase from an emulsion which is obtainable by emulsifying a solution of the dye in a water-immiscible organic solvent and which includes a protective colloid by stripping off the solvent.

2. A process as claimed in claim 1, wherein the precipitating is effected by adding an aqueous solution of a protective colloid.

3. A process as claimed in claim 1 or 2, wherein the protective colloid is selected from the group consisting of polyvinylpyrrolidone, polyacrylic acid or polymethacrylic acid and the copolymers thereof with an ethylenically unsaturated C₄-C₈-dicarboxylic anhydride, polyacrylamide, polymethacrylamide, polyethylene oxide, polypropylene oxide and copolymers thereof, gelatin, casein and naphthalenesulfonic acid-formaldehyde condensate.

4. A dye obtainable by the process as claimed in any of claims 1 to 3, wherein not less than 80% of the dye is present in the form of essentially spherical particles and having a crystallinity of not more than 30%.

5. A dye as claimed in claim 4 having an average particle size within the range from 5 nm to 1 µm and/or a variance of less than 45%.

6. A colorant comprising a dye as claimed in claim 4 or 5, optionally together with customary auxiliary and additive substances.

7. A colorant as claimed in claim 6 in the form of an ink-jet ink preparation comprising at least one dye as claimed in claim 4 or 5 dispersed in an aqueous medium.

8. The use of the dyes of claim 4 or 5 for printing print media, especially paper, foil, film, papers for the reproduction of digital photographic images and graphics, and also for printing textiles, especially by transfer printing.

## Revendications

1. Procédé pour la préparation d'un colorant précipité, insoluble dans l'eau ou difficilement soluble dans l'eau, sous forme dispersée colloïdale avec une taille de particules moyenne dans l'intervalle de 5 nm à 5 µm et avec une variance inférieure à 50 %, à chaque fois mesurée au moyen d'une dispersion de lumière quasi-élastique et évaluation selon la méthode cumulative, dans lequel on précipite le colorant
a) à partir d'une solution dans un solvant organique miscible avec l'eau par addition d'une phase aqueuse, ou
b) à partir d'une émulsion, qui peut être obtenue par émulsification d'une solution du colorant dans un solvant organique non-miscible avec l'eau et qui contient un colloïde protecteur, dans une phase aqueuse par élimination du solvant.

2. Procédé selon la revendication 1, dans lequel la précipitation s'effectue par addition d'une solution aqueuse d'un colloïde protecteur.

3. Procédé selon la revendication 1 ou 2, dans lequel le colloïde protecteur est choisi parmi la poly(pyrrolidone de vinyle), l'acide polyacrylique ou l'acide polyméthacrylique et leurs copolymères avec un anhydride de diacide carboxylique en C₄-C₈ à insaturation éthylénique, le polyacrylamide, le polyméthacrylamide, le poly(oxyde d'éthylène), le poly(oxyde de propylène) et leurs copolymères, la gélatine, la caséine et un condensat d'acide naphtalènesulfonique et de formaldéhyde.

4. Colorant, pouvant être obtenu par le procédé selon l'une des revendications 1 à 3, dans lequel au moins 80 % du colorant sont sous forme de particules essentiellement sphériques et avec une cristallinité d'au plus 30 %.

5. Colorant selon la revendication 4 ayant une taille de particules moyenne dans l'intervalle de 5 nm à 1 µm et/ou une variance inférieure à 45 %.

6. Matière colorante, contenant un colorant selon la revendication 4 ou 5, éventuellement conjointement avec des adjuvants et des àdditifs classiques.

7. Matière colorante selon la revendication 6, sous forme d'une préparation d'encre pour jet d'encre, qui contient dans un milieu aqueux au moins un colorant dispersé selon la revendication 4 ou 5.

8. Utilisation des colorants selon la revendication 4 ou 5 pour l'impression de milieux à imprimer, en particulier de papier, feuilles ou films, feuilles transparentes, papiers pour la reproduction de tirages photographiques numériques et de graphiques, ainsi que pour l'impression de textiles, en particulier au moyen d'une impression par transfert.
